(19) Europäisches Patentamt
European Patent Office
Office européen des brevets

(11) **EP 3 767 946 A1**

(12) **EUROPÄISCHE PATENTANMELDUNG**

(43) Veröffentlichungstag:
**20.01.2021 Patentblatt 2021/03**

(51) Int Cl.:
***H04N 13/31*** *(2018.01)*      ***H04N 13/317*** *(2018.01)*
***G02B 30/32*** *(2020.01)*

(21) Anmeldenummer: **19186719.1**

(22) Anmeldetag: **17.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **SeeFront GmbH**
**20097 Hamburg (DE)**

(72) Erfinder:
• **Grossmann, Christoph**
  **20097 Hamburg (DE)**
• **Stelldinger, Peer**
  **22397 Hamburg (DE)**

(74) Vertreter: **Ter Meer Steinmeister & Partner**
**Patentanwälte mbB**
**Artur-Ladebeck-Strasse 51**
**33617 Bielefeld (DE)**

(54) **BASISDISPLAY FÜR EINE AUTOSTEREOSKOPISCHE DISPLAYANORDNUNG**

(57) Basisdisplay (10) für eine autostereoskopische Displayanordnung (30, 32), mit in einem periodischen Raster (42) angeordneten Pixeln (12), dadurch gekennzeichnet, dass für mindestens eine der beiden Diagonalen (fl, f2), die mit der Displayhorizontalen (x) einen Winkel von 45° bilden, gilt, dass für zwei beliebige Pixel (12), die die Bedingung erfüllen, dass eine durch die Mittelpunkte (P) der beiden Pixel gehende Gerade (g) mit der Diagonalen (fl, f2) einen Winkel zwischen -2° und 2° bildet, der Mittenabstand (d1, d2) der Pixel größer ist als das 1,5-fache, vorzugsweise größer ist als das 1,8-fache, weiter vorzugsweise größer ist als das 2-fache eines Basisabstands (e), der definiert ist als das Minimum der Mittenabstände aller Pixelpaare.

Fig.1

EP 3 767 946 A1

**Beschreibung**

Die Erfindung betrifft ein Basisdisplay für eine autostereoskopische Displayanordnung, mit in einem periodischen Raster angeordneten Pixeln.

Bei dem Basisdisplay kann es sich beispielsweise um einen Computerbildschirm oder um den Bildschirm eines Tablets oder Smartphones handeln. Um aufbauend auf dem Basisdisplay eine autostereoskopische Displayanordnung zu bilden, wird dem Basisdisplay in gewissem Abstand eine sogenannte Parallaxenbarriere überlagert, durch die Lichtstrahlen, die sich von der Oberfläche des Bildschirms in Richtung auf einen Betrachter ausbreiten, so unterbrochen oder abgelenkt werden, dass ein Teil der Pixel des Bildschirms nur mit dem linken Auge sichtbar ist, während ein anderer Teil nur mit dem rechten Auge sichtbar ist. Die für die linken und rechten Augen sichtbaren Pixel bilden eine abwechselnde Folge von Streifen. Wenn ein Objekt autostereoskopisch dargestellt werden soll, so werden die Pixel in den betreffenden Streifen jeweils so angesteuert, dass das linke und das rechte Auge des Betrachters das Objekt mit einer parallaktischen Verschiebung sehen, die der dreidimensionalen Geometrie des Objekts entspricht. Ein Beispiel einer solchen autostereoskopischen Displayanordnung wird in WO 2016/107892 A1 beschrieben.

Bei der Parallaxenbarriere kann es sich beispielsweise um eine Streifenbarriere handeln, die bestimmte streifenförmige Zonen auf der Oberfläche des Basisdisplays für ein Auge des Betrachters verdeckt, oder um ein Linsenraster, beispielsweise aus parallelen Zylinderlinsen, die die Pixel in den sichtbaren Streifen auf der Bildschirmoberfläche nach Art einer Lupe vergrößern, während das Licht anderer Pixel so abgelenkt wird, dass es das betreffende Auge des Betrachters nicht erreicht.

Damit auch dreidimensionale Bilder mit möglichst hoher Auflösung wiedergegeben werden können, sollte die Periode der von der Parallaxenbarriere erzeugten Streifen nicht wesentlich größer sein als die Periode der Pixel im Pixelraster. Durch die Überlagerung zweier periodischer Strukturen mit ähnlicher Periode, nämlich des Pixelrasters und der Parallaxenbarriere, kann es jedoch zu störenden Artefakten in der Form von räumlichen Schwebungen kommen, die auch als Schwebungs-Muster bekannt sind. Eine Möglichkeit, diesen Schwebungs-Effekt zu unterdrücken, besteht darin, dass die Parallaxenbarriere so montiert wird, dass ihre Streifen etwas gegenüber der Displayvertikalen geneigt sind. Da die Augen des Betrachters im Normalfall auf einer horizontalen Geraden liegen, wird vorzugsweise mit einer Neigung der Parallaxenbarriere gearbeitet, bei der der Winkel zwischen der Displayhorizontalen x und den Streifen der Parallaxenbarriere mindestens 55° beträgt.

Die Displayhorizontale x entspricht dabei derjenigen Richtung, die sich als Schnittgerade der Displayebene mit einer zweiten Ebene ergibt, welche dadurch gekennzeichnet ist, dass sie die Mittelpunkte beider Augen eines Betrachters mit nicht geneigtem Kopf enthalten. Bei einem typischerweise rechteckigen Display verläuft die Displayhorizontale x damit in der Regel parallel zur oberen und zur unteren Displaykante. Die Displayvertikale y verläuft in der Displayebene senkrecht zur Displayhorizontalen x und somit typischerweise parallel zur linken und zur rechten Displaykante. Kippt man ein Display um 90°, so wird aus der vormaligen Displayhorizontalen die neue Displayvertikale und aus der vormaligen Displayvertikalen die neue Displayhorizontale.

Ein Tablet oder ein Smartphone kann typischerweise durch Kippen um 90° sowohl im Hochformat als auch im Querformat verwendet werden. Ein Benutzer wird diese Eigenschaft auch im 3D-Modus erwarten. Die bisher gebräuchlichen Parallaxenbarrieren, bei denen die Streifen nahezu vertikal verlaufen, sind jedoch entweder nur für die Wiedergabe von Bildern im Querformat oder nur für die Wiedergabe von Bildern im Hochformat geeignet.

In US 2012/050857 A1 wird eine autostereoskopische Displayvorrichtung beschrieben, die mit zwei schaltbaren Parallaxenbarrieren arbeitet, so dass bei einem Wechsel von Hochformat auf Querformat auf eine andere Parallaxenbarriere umgeschaltet werden kann. Aus US 8 441 584 B2 ist eine Streifenbarriere in der Form eines Flüssigkristall-Displays (LCD) bekannt, mit der durch entsprechende Ansteuerung des LCDs unterschiedliche Streifenmuster generiert werden können.

Aufgabe der Erfindung ist es, ein Basisdisplay zu schaffen, mit dem auf einfache Weise eine autostereoskopische Displayvorrichtung gebildet werden kann, die die Betrachtung von Bildern ohne Änderung der Parallaxenbarriere sowohl im Hochformat als auch im Querformat erlaubt, indem die Streifen der Parallaxenbarriere in einem in etwa diagonalen Winkel zur Displayhorizontalen x verlaufen.

Diese Aufgabe wird erfindungsgemäß dadurch gelöst, dass für mindestens eine der beiden Diagonalen, die mit der Displayhorizontalen x einen Winkel von 45° bilden, gilt, dass für zwei beliebige Pixel, die die Bedingung erfüllen, dass eine durch die Mittelpunkte der beiden Pixel gehende Gerade mit der Diagonalen einen Winkel zwischen -2° und 2° bildet, der Mittenabstand der Pixel größer ist als das 1,5-fache, vorzugsweise größer ist als das 1,8-fache, weiter vorzugsweise größer ist als das 2-fache eines Basisabstands, der definiert ist als das Minimum der Mittenabstände aller Pixelpaare.

Bei einem typischen Display mit einem quadratischen, entlang der Displayhorizontalen x und Displayvertikalen y ausgerichteten Pixelraster haben alle Paare von direkt benachbarten Pixeln einen einheitlichen Mittenabstand, der dann definitionsgemäß der Basisabstand ist. Für möglichst nahe aneinander liegende Pixel, die exakt oder zumindest annähernd auf einer Diagonalen des Pixelrasters liegen, ist der Mittenabstand dann in etwa das 1,414-fache des Basisabstands (Quadratwurzel aus 2). Erfindungsgemäß wird nun aus einem solchen Pixelraster ein modifiziertes Pixelraster hergeleitet, bei dem der Mittenabstand für die im Wesentlichen auf einer Diagonalen liegenden Pixel (im Folgenden kurz als Diagonalabstand bezeichnet) auf mindestens das 1,5-fache des Basisabstands, vorzugsweise mindestens das 2-fache des Basisabstandes vergrößert wird.

Diese spezielle Eigenschaft des Pixelrasters hat den Vorteil, dass zum Aufbau einer autostereoskopischen Displayanordnung eine Parallaxenbarriere verwendet werden kann, deren Streifen "diagonal" verlaufen, also mit der Displayhorizontalen x einen Winkel von annähernd 45° bilden, ohne dass störende Schwebungs-Effekte auftreten. Dadurch ist es möglich, ein und dieselbe Parallaxenbarriere sowohl für die Bildwiedergabe im Hochformat als auch im Querformat zu verwenden. Die Unterdrückung des Schwebungs-Effekts wird im Wesentlichen dadurch erreicht, dass das Pixelraster in der Richtung der Diagonalen, die parallel zu den Streifen der Parallaxenbarriere verläuft, eine derart bemessene Periodenlänge hat, dass die Frequenz der räumlichen Schwebungen so hoch wird, dass letztere an der Grenze der Auflösung des Pixelrasters liegt und damit nicht mehr wahrnehmbar ist.

Gegenstand der Erfindung ist auch eine autostereoskopische Displayanordnung mit einem Basisdisplay, das die oben beschriebene Eigenschaft hat. Bei dieser Anordnung verlaufen die Streifen der Parallaxenbarriere annähernd diagonal, d.h., der Winkel zwischen diesen Streifen und der Displayhorizontalen x liegt zwischen 40 und 50°. Wenn das Pixelraster so beschaffen ist, dass die Bedingung "Mittenabstand von Pixeln entlang derselben Diagonalen größer als das 1,5-fache, vorzugsweise größer als das 2-fache des Basisabstands" auch für Paare von Pixeln erfüllt ist, bei denen die Verbindungsgerade der Mittelpunkte mit der 45°-Richtung geringfügig abweicht, beispielsweise um ± 2°, vorzugsweise um ± 5°, so kann die Streifenrichtung der Parallaxenbarriere ebenfalls um einen gewissen Winkel von der Diagonalen abweichen.

Vorteilhafte Ausgestaltungen und Weiterbildungen der Erfindung sind in den Unteransprüchen angegeben.

Die oben genannte Eigenschaft des Pixelrasters lässt sich beispielsweise dadurch erreichen, dass ausgehend von einem der heute gebräuchlichen Standard-Pixelraster wie beispielsweise "Standard-RGB-Stripe", "PenTile Diamond" oder dergleichen, das Pixelraster in einer Richtung, beispielsweise in der Richtung senkrecht zu der Displayhorizontalen x, um einen bestimmten Faktor gestaucht oder gestreckt wird. Eine andere Möglichkeit besteht darin, die Pixel in aufeinanderfolgenden Zeilen oder Spalten des Pixelrasters jeweils um einen Bruchteil der Pixelbreite beziehungsweise Pixelhöhe gegeneinander zu verschieben.

Im folgenden werden Ausführungsbeispiele anhand der Zeichnung näher erläutert.

Es zeigen:

Fig. 1      einen vergrößerten Ausschnitt eines erfindungsgemäßen Basisdisplays;

Fig. 2      einen vergrößerten Ausschnitt einer autostereoskopischen Displayvorrichtung mit einem erfindungsgemäßen Basisdisplay;

Fig. 3      eine Skizze zur Erläuterung des Prinzips der autostereoskopischen Bildwiedergabe;

Fig. 4      eine Skizze einer Parallaxenbarriere;

Fig. 5      Darstellungen einer autostereoskopischen Displayvorrichtung im Querformat und im Hochformat;

Fig. 6      einen vergrößerten Ausschnitt eines Pixelrasters eines herkömmlichen Standard-RGB-Stripe Basisdisplays;

Fig. 7      einen vergrößerten Ausschnitt eines Pixelrasters eines herkömmlichen PenTile Diamond Basisdisplays;

Fig. 8      Pixelstrukturen verschiedener bekannter Standard-Pixelraster;

Fig. 9      ein Pixelraster eines erfindungsgemäßen Basisdisplays, das durch Modifikation des Pixelrasters nach Fig. 7 erhalten wurde;

Fig. 10      eine Skizze zur Erläuterung einer Eigenschaft des Pixelrasters nach Fig. 9;

Fig. 11      ein Pixelraster eines Basisdisplays gemäß einem anderen Ausführungsbeispiel der Erfindung, das durch Modifikation des Pixelrasters nach Fig. 6 erhalten wurde;

Fig. 12      ein Pixelraster eines Basisdisplays gemäß noch einem anderen Ausführungsbeispiel der Erfindung, das durch Modifikation eines anderen Basisrasters erhalten wurde;

Fig. 13      eine Simulation einer herkömmlichen autostereoskopischen Displayvorrichtung mit einer 45°-Parallaxenbarriere; und

Fig. 14      eine Simulation einer Displayvorrichtung gemäß der Erfindung.

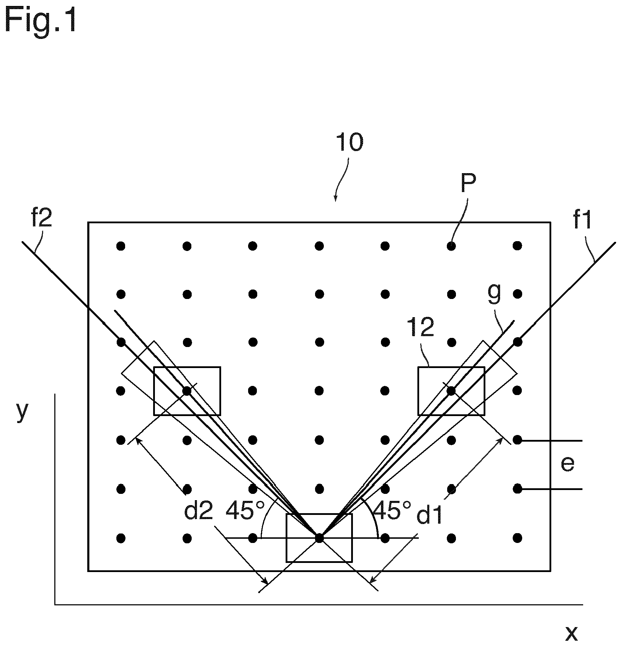

In Fig. 1 ist ein Ausschnitt der Displayfläche eines Basisdisplays 10 gezeigt, beispielsweise eines Displays eines Tablet-Computers oder eines Smartphones, das Teil einer autostereoskopischen Displayvorrichtung gemäß der Erfindung ist. Das Basisdisplay 10 weist einzeln ansteuerbare Pixel 12 auf, die in einem periodischen Raster angeordnet sind und für das in Fig. 1 die Positionen der Mittelpunkte P der Pixel eingezeichnet sind.

Eine für das Pixelraster charakteristische Längeneinheit, die sogenannte Basiseinheit e, ist definiert als das Minimum der Mittenabstände aller Paare von Pixeln 12. Im gezeigten Beispiel entspricht e gerade dem Abstand der Mittelpunkte zweier vertikal benachbarter Pixel, also damit genau der Pixelhöhe. Im Allgemeinen muss die Basiseinheit e aber nicht dem Mittenabstand zwischen rein vertikal oder rein horizontal benachbarten Pixeln entsprechen, sondern kann auch dem Mittenabstand schräg aneinander liegender Pixel entsprechen, wenn dieser im Vergleich zu allen anderen Mittenabständen minimal ist.

In Fig. 1 ist eine Displayhorizontale mit x und die Displayvertikale mit y bezeichnet. typischerweise verläuft die Displayhorizontale x parallel zur unteren Displaykante und die Displayvertikale y parallel zu den seitlichen Displaykanten. Zwei Diagonalen, die dadurch definiert sind, dass sie mit der Displayhorizontalen x einen Winkel von 45° bilden, sind mit f1 und f2 bezeichnet. Weiterhin ist in Fig. 1 eine etwa diagonal verlaufende Gerade g so gelegt, dass sie durch die Mittelpunkte P zweier Pixel hindurchgeht. Der Mittenabstand d1 zwischen diesen beiden Pixeln beträgt in diesem Beispiel etwa das 4,2-fache der Basiseinheit e.

Im gesamten in Fig. 1 gezeigten Pixelraster gibt es keine zwei Pixel 12, deren Mittelpunkte P auf einer Geraden liegen, die parallel zu f1 verläuft, und deren Mittenabstand kleiner ist als d1. Auch bei Pixelpaaren, bei denen die Verbindungsgerade nicht exakt parallel zu f1 verläuft, sondern um einen Winkel von ± 2° oder sogar ± 5° von f1 abweicht, beträgt der Mittenabstand nicht weniger als d1. Analog ergibt sich ein minimaler Mittenabstand d2 von Pixelmittelpunkten, deren Verbindungsgerade in etwa parallel zu f2 verläuft. Als "Diagonalabstand" d1 beziehungsweise d2 bezüglich der Diagonalen f1 beziehungsweise f2 soll deshalb allgemein der kleinste Mittenabstand zweier Pixel 12 bezeichnet werden, für welche die durch die Mittelpunkte P gehende Gerade in dem Winkelbereich von ± 2°, vorzugsweise ± 5° zur Diagonalen f1 beziehungsweise f2 liegt.

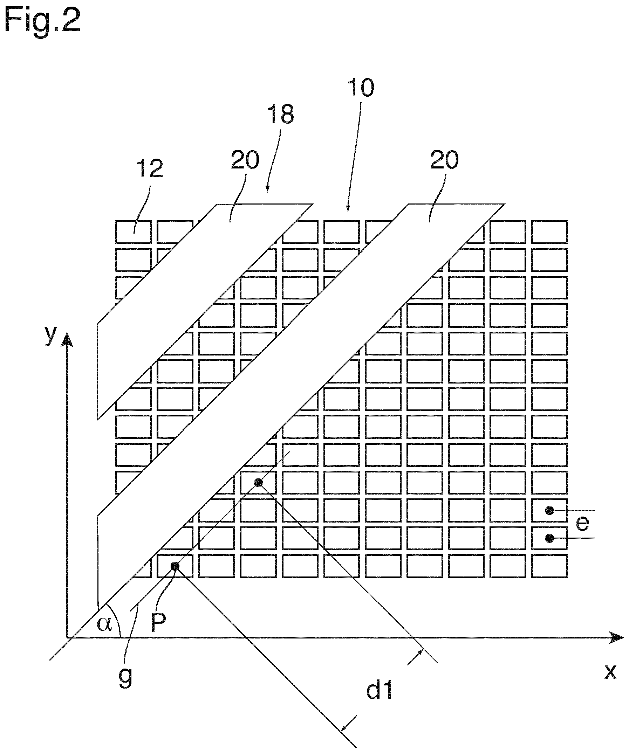

Fig. 2 zeigt eine Autostereoskopische Displayvorrichtung basierend auf dem bereits in Fig. 1 dargestellten Basisdisplay 10. Dem Basisdisplay 10 ist eine Parallaxenbarriere 18 überlagert, die hier nur durch zwei Streifen 20 einer Folge von Streifen repräsentiert wird. Für eine gegebene Position eines Auges eines Betrachters, beispielsweise des linken Auges, geben die Streifen 20 diejenigen Zonen auf dem Basisdisplay 10 an, auf deren Pixel der Blick durch die Parallaxenbarriere 18 verwehrt wird. Die Lücken zwischen den Streifen 20 geben Zonen an, in denen die Pixel 12 für das linke Auge des Betrachters sichtbar sind. Für das rechte Auge wären umgekehrt die Pixel unter den Streifen 20 sichtbar und die Pixel in den Lücken unsichtbar.

Im in Fig. 2 gezeigten Beispiel bilden die parallelen Streifen 20 mit der Displayhorizontalen x einen Winkel α von 45°.

Aufgrund des großen Diagonalabstands führt bei dem hier gezeigten Pixelraster die Überlagerung der Parallaxenbarriere 18 mit dem periodischen Pixelraster nicht zu störenden Schwebungs-Effekten. Dasselbe gilt auch, wenn der Winkel zwischen den Streifen 20 der Parallaxenbarriere 18 und der Displayhorizontalen x nicht exakt 45° beträgt, sondern um bis zu ± 5° von 45° abweicht. Auf diese Weise wird ein gewisser Spielraum geschaffen, der es erlaubt, durch Feineinstellung des Winkels α die Unterdrückung von Schwebungs-Effekten zu optimieren.

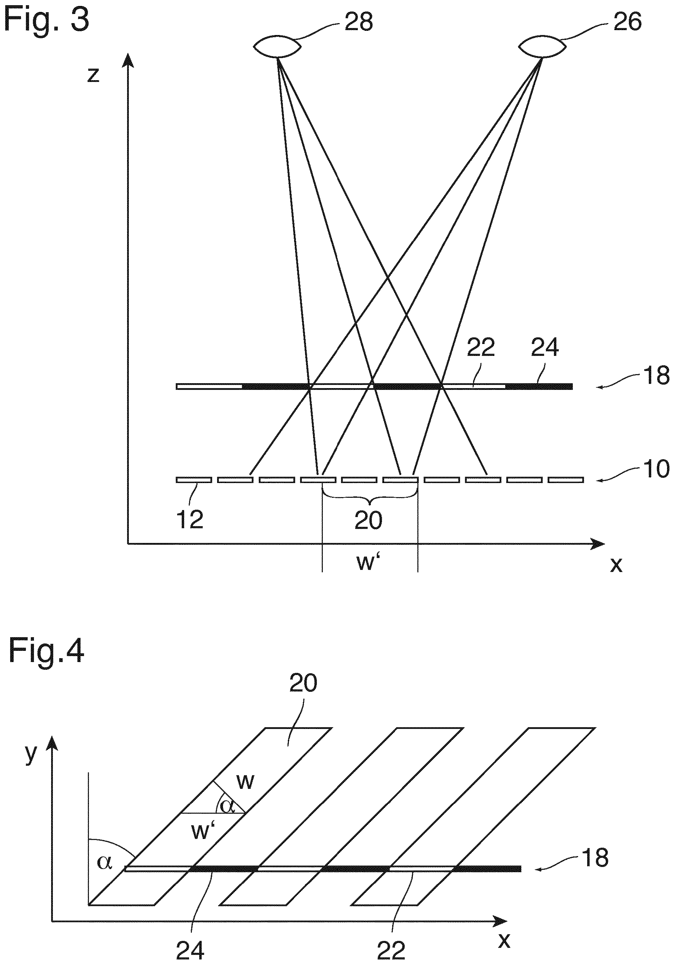

Das Funktionsprinzip der autostereoskopischen Bildwiedergabe soll anhand der Fig. 3 kurz erläutert werden. Das Basisdisplay 10 mit den Pixeln 12 ist in Fig. 3 in einer Seitenansicht gezeigt. In einem gewissen Abstand (in der Richtung z) oberhalb des Basisdisplays 10 ist die Parallaxenbarriere 18 angeordnet, in diesem Fall eine Streifenbarriere mit einer abwechselnden Folge von transparenten Streifen 22 und intransparenten Streifen 24. Das Basisdisplay 10 und die Parallaxenbarriere 18 bilden zusammen die autostereoskopische Displayvorrichtung. Gezeigt sind außerdem die linken und rechten Augen 26, 28 eines Betrachters, der aus einem gewissen Betrachtungsabstand auf die Displayvorrichtung blickt. Für das linke Auge 26 des Betrachters definieren die intransparenten Streifen 24 die Lage der Streifen 20 mit unsichtbaren Pixeln auf dem Basisdisplay 10, und die transparenten Streifen 22 der Parallaxenbarriere definieren die Lücken zwischen diesen Streifen 20. Für das rechte Auge 28 des Betrachters sind diejenigen Pixel sichtbar, die für das linke Auge 26 unsichtbar sind und umgekehrt. Indem die Pixel 12 in Abhängigkeit vom Betrachtungsabstand und Augenabstand des Betrachters so angesteuert werden, dass das linke Auge 26 nur die Bildinformation für das linke Auge und das rechte Auge 28 nur die Bildinformation für das rechte Auge erhält, lässt sich eine räumliche Bildwahrnehmung erreichen. Bei Pixeln, die auf dem Rand zwischen intransparenten und transparenten Streifen liegen, ist es naheliegend, die einzelnen Subpixel separat entsprechend ihrer Lage zu diesem Rand anzusteuern.

Um eine möglichst hohe räumliche Auflösung bei der räumlichen Wiedergabe von Bildern (im 3D-Modus) zu erreichen, sollte die Periodenlänge der Parallaxenbarriere möglichst klein gewählt werden. Sie sollte vorzugsweise jedoch so groß sein, dass in den Lücken zwischen den Streifen 20 jeweils mehr als ein halbes Pixel 12 sichtbar ist. Die Breite der transparenten Streifen 22 und der intransparenten Streifen 24 (oder, wenn die Parallaxenbarriere en Linsenraster ist, die Breite der Zylinderlinsen) ist nach dem Strahlensatz von dem Betrachtungsabstand, dem Abstand zwischen den Augen 26, 28 und dem (effektiven) Abstand zwischen dem Basisdisplay 10 und der Parallaxenbarriere 18 abhängig. Um eine möglichst kompakte Displayanordnung mit einem geringen Abstand zwischen dem Basisdisplay 10 und der Parallaxenbarriere 18 zu erhalten, sollte die Breite der Streifen 22, 24 möglichst klein gewählt werden.

Wie in Fig. 4 gezeigt ist, spielt dabei auch die Neigung der Parallaxenbarriere 18 relativ zu der Displayhorizontalen x eine Rolle, konkret also der Winkel α zwischen den Streifen 20 und der Richtung x. Die Bildebene in Fig. 4 ist die Ebene, die durch die Achsen x und y aufgespannt wird, so dass man senkrecht auf die Streifen 20 blickt. Nur die Parallaxenbarriere 18, die letztlich die Streifen 20 erzeugt, ist wie in Fig. 3 im Schnitt dargestellt. Die Differenz zwischen der Breite der Streifen 22, 24 einerseits und der Breite der Streifen 20 andererseits kann bei dieser Betrachtung vernachlässigt werden. Die scheinbare Streifenbreite in der Richtung x ist in Figuren 3 und 4 mit w' bezeichnet. In Fig. 4 ist auch die wahre Breite w der Streifen in der Richtung senkrecht zur Laufrichtung der Streifen gezeigt. Es gilt

$$w = w' * \cos(\alpha).$$

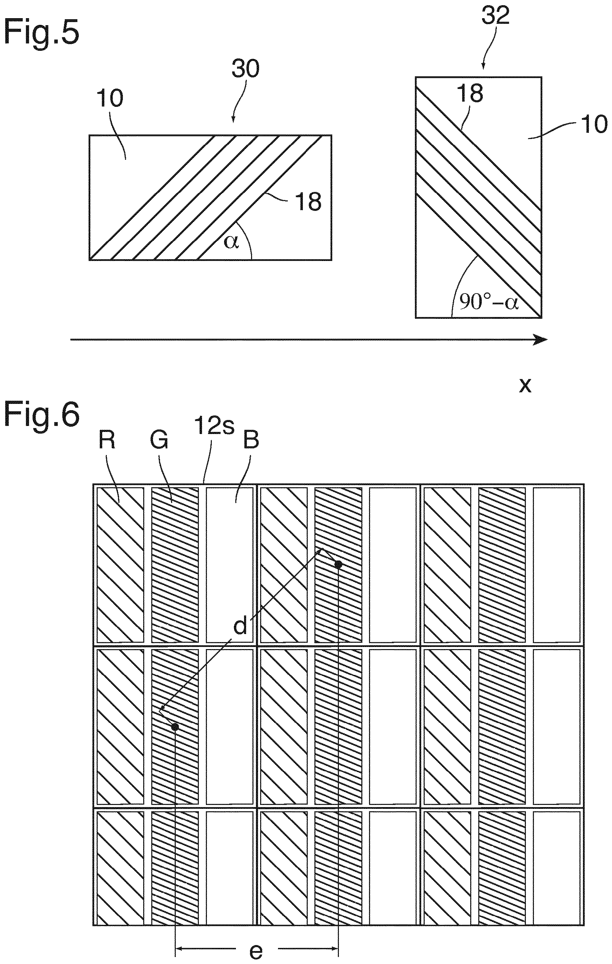

Es ist vorteilhaft, wenn (wie in Fig. 2) der Winkel α zumindest annähernd 45° beträgt. In dem Fall kann nämlich die Displayvorrichtung sowohl für die Bildwiedergabe im Querformat als auch für die Bildwiedergabe im Hochformat benutzt werden, wie in Fig. 5 illustriert wird. Dort sind schematisch zwei autostereoskopische Displayanordnungen 30, 32 gezeigt, die jeweils das Basisdisplay 10 sowie die Parallaxenbarriere 18 aufweisen, die hier nur durch eine Schar paralleler Streifen angedeutet ist. Die Displayanordnung 30 ist so orientiert, dass Bilder (auch in 3D) im Querformat wiedergegeben werden können. Die untere Displaykante verläuft in der Richtung x. Die Displayanordnung 32 ist so orientiert, dass Bilder im Hochformat wiedergegeben werden. Die untere Displaykante, die in der Richtung x verläuft, ist hier die kürzere Kante des Basisdisplays. Die räumliche Beziehung zwischen dem Basisdisplay 10 und der Parallaxenbarriere 18 ist bei beiden Displayanordnungen 30, 32 die gleiche, und es gilt in beiden Fällen, dass die Parallaxenbarriere mit der Displayhorizontalen x einen Winkel α von (etwa) 45° bildet.

In Fig. 6 ist ein Ausschnitt eines herkömmlichen Pixelrasters für ein Farbdisplay gezeigt. Dieses Pixelraster, das unter der Bezeichnung "Standard-RGB-Stripe" bekannt ist, weist quadratische Pixel 12s auf. In Fig. 6 sind 3 x 3 solcher Pixel gezeigt. Jedes Pixel 12s ist in drei streifenförmige, nebeneinander angeordnete Subpixel R, G, B unterteilt, entsprechend den Grundfarben rot, grün und blau. Die Pixelbreite ist gleich der Pixelhöhe und gleich der Basiseinheit e. Der Diagonalabstand d1 beziehungsweise d2, das heißt der Mittenabstand zweier auf einer Diagonalen liegender benachbarter Pixel beträgt für beide Diagonalen etwa 1,414 e. Dieses herkömmliche Pixelraster weist somit nicht die Eigenschaft auf, die anhand von Fig. 1 für das erfindungsgemäße Pixelraster beschrieben wurde.

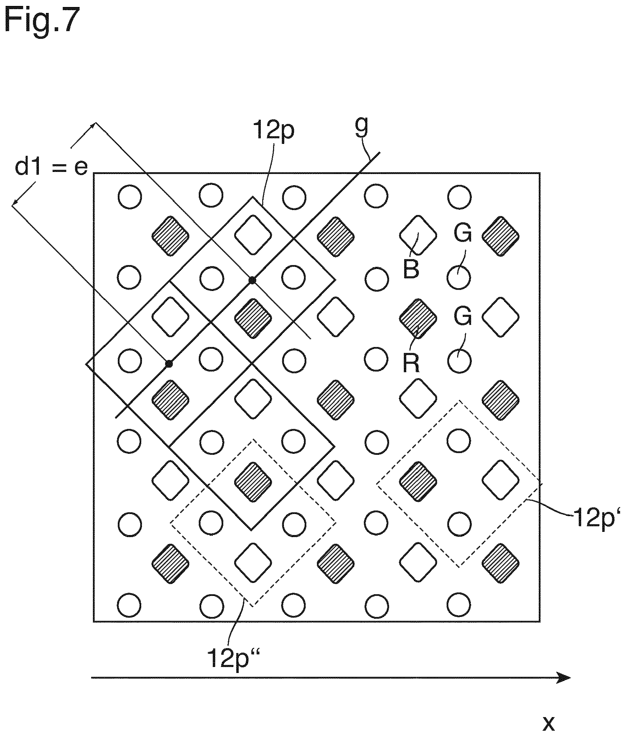

Ein weiteres Beispiel für ein bekanntes Pixelraster eines Farbdisplays ist in Fig. 7 gezeigt. Dieses Pixelraster wird als "PenTile Diamond" bezeichnet. Die einzelnen Pixel, die hier mit 12p bezeichnet sind, haben "Diamantform" (ein um 45° gedrehtes Quadrat mit der Seitenlänge e.) Jedes Pixel 12p enthält ein Subpixel R, ein Subpixel B und zwei etwas kleinere Subpixel G. Hier betragen die Diagonalabstände d1 und d2 für beide Diagonalen f1 und f2 genau 1 e.

Eine Menge der Subpixel verschiedener Farben, die zusammen ein Pixel bilden, soll im Folgenden verallgemeinert als der Satz (von Subpixeln) dieses Pixels bezeichnet werden. Der Satz eines Pixels in der PenTile-Diamond-Struktur besteht damit wie beschrieben aus vier Subpixeln. Er kann summarisch als RGBG geschrieben werden.

Bei dem in Fig. 7 gezeigten Pixelraster "PenTile Diamond" gibt es (wie auch bei den meisten anderen Pixelrastern) unterschiedliche Möglichkeiten, Pixel so zu definieren, dass jedes Pixel genau ein Sub-Pixel B, ein Sub-Pixel R und zwei Sub-Pixel G enthält. Zwei Beispiele für alternative Möglichkeiten sind in Fig. 7 gestrichelt eingezeichnet und mit 12p' bzw. 12p" bezeichnet.

Aufgrund dieser Mehrdeutigkeit, die auch bei einigen anderen Pixelrastern besteht, sollte näher definiert werden, was im Sinne dieser Anmeldung unter einem "Pixel" zu verstehen ist.

Für die Zwecke dieser Anmeldung wird ein "Pixel" definiert als eine zusammenhängende Teilfläche T der Oberfläche des Basisdisplays, welche die folgenden Bedingungen erfüllt:

(1) T enthält genau einen Satz von Subpixeln.

(2) Die Displayebene lässt sich vollständig und überlappungsfrei aus einer Vielzahl von durch Translation aus T hervorgegangenen Flächen zusammensetzen (parkettieren).

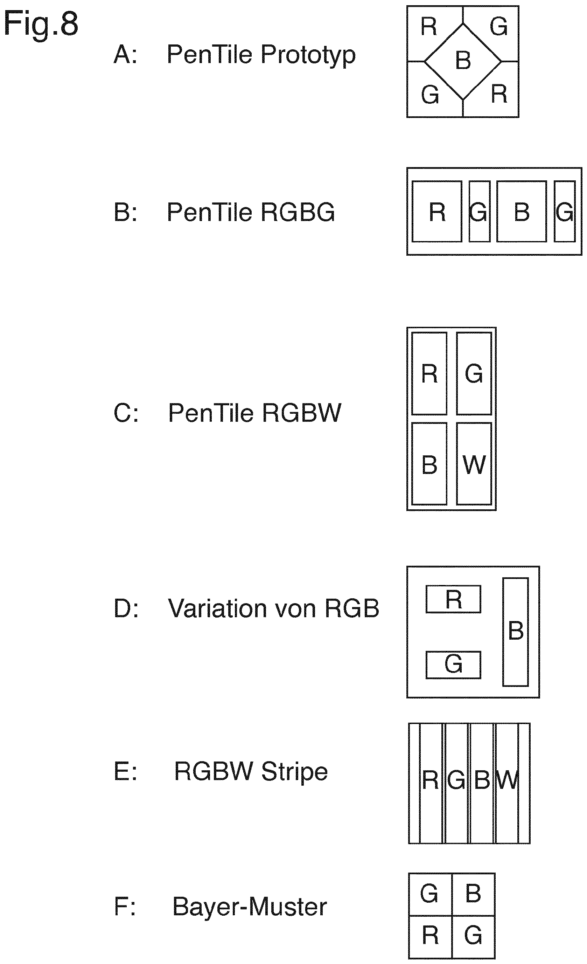

Nachstehend sind einige weitere gängige Pixelraster für Farbdisplays aufgelistet, und für jedes Pixelraster sind die Diagonalabstände d1 und d2 angegeben. In all diesen Fällen ist der Diagonalabstand für beide Diagonalen identisch, d1=d2. Die Pixelstrukturen dieser Standard-Pixelraster sind in Fig. 8 A-F dargestellt. Gezeigt ist jeweils der Umriss eines einzelnen Pixels sowie die Anordnung der Sub-Pixel R, G, B, W (W steht für "weiß") innerhalb des Pixels.

| | |
|---|---|
| PenTile Prototyp: | d1 = d2 = ~ 1,414 e |
| PenTile RGBG: | d1 = d2 = 1 e |
| PenTile RGBW: | d1 = d2 = 1 e |
| Variation von RGB: | d1 = d2 = ~ 1,414 e |
| RGBW Stripe: | d1 = d2 = ~ 1,414 e |
| Bayer Muster: | d1 = d2 = ~ 1,414 e |

Es zeigt sich somit, dass für all diese gebräuchlichen Pixelraster unabhängig von der gewählten Diagonale der Diagonalabstand in Basiseinheiten nicht größer ist als etwa 1,414.

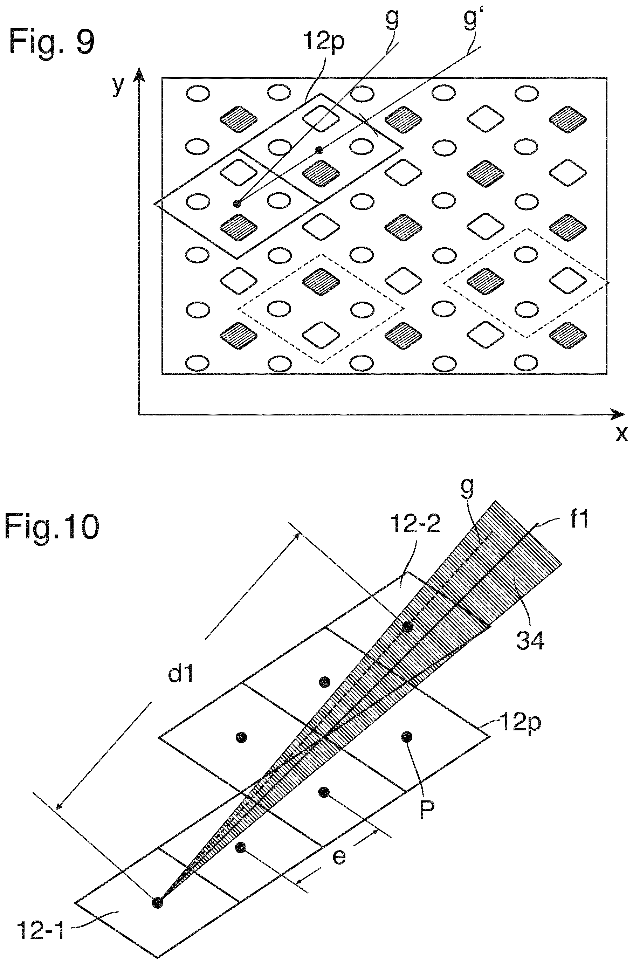

Es soll nun unter Bezugnahme auf Fig. 9 ein Beispiel erläutert werden, wie man ein herkömmliches Pixelraster so modifizieren kann, dass es für mindestens eine der Diagonalen f1 oder f2 die folgende Bedingung erfüllt:

Diagonalabstand d1 > 1,5 e beziehungsweise d2 > 1,5 e

In Fig. 9 ist das in Fig. 7 gezeigte Pixelraster dadurch modifiziert worden, dass das gesamte Raster in der Richtung y um den Faktor 2/3 gestaucht wurde. Die Mittelpunkte der Pixel 12p haben sich durch die Stauchung so gegeneinander verschoben, dass die Mittelpunkte, die in Fig. 7 auf einer 45°-Geraden g lagen, nun auf einer Geraden g' liegen, die um einen Winkel von mehr als 3° (in diesem konkreten Beispiel sogar mehr als 8°) von der Geraden g abweicht, so dass der Mittenabstand dieser beiden Pixel kein "Diagonalabstand" im Sinne der oben gegebenen Definition mehr ist. Der Basisabstand e entspricht aber weiterhin dem Abstand der beiden über g' miteinander verbundenen Pixel 12p.

In Fig. 10 sind einige Pixel 12p des gestauchten Pixelrasters aus Fig. 9 dargestellt. Auch die jeweiligen Mittelpunkte P sind eingezeichnet, ebenso die Diagonale f1 sowie eine Winkelzone 34 von ± 5° um die Diagonale f1 herum. Wenn man von dem Pixel 12-1 ganz unten links in Fig. 9 ausgeht, so erkennt man, dass das nächste Pixel 12-2, dessen Mittelpunkt wieder in der Winkelzone 34 liegt, erst in der drittnächsten Pixelspalte zu finden ist. Das entspricht einem Diagonalabstand d1 von etwa 3,73 e. Dieses Pixel liegt jedoch außerhalb der Winkelzone von ± 2° um die Diagonale f1 herum, so dass der Diagonalabstand d1 für diesen Winkelbereich bei etwa 4,71 e liegt.

Auf analoge Weise kann man auch andere bekannte Pixelraster stauchen, um den Diagonalabstand für mindestens eine der beiden Diagonalen f1, f2 auf mindestens 1,5 e, vorzugsweise mindestens 2 e anzuheben.

Wenn das Pixelraster durch Stauchung modifiziert wird, sind auch andere Stauchungsfaktoren als 2/3 möglich. Attraktiv ist z.B. auch ein Stauchungsfaktor 1/2. Wenn man z.B. das Standard-RGB-Stripe Raster oder das PenTile-Diamond Raster um den Faktor 1/2 staucht, erhält man unabhängig von der Wahl der Diagonale f1, f2 jeweils den Diagonalabstand d1=d2 = ~2,828 e. Zudem wird auf diese Weise, durch die gegenüber dem nicht gestauchten PenTile-Diamond Raster verdoppelte Zahl der Subpixel, der Verlust an wahrgenommener Auflösung im 3D-Modus weitgehend ausgeglichen.

Wenn man eine Stauchung um den Stauchungsfaktor 1/2 auf das Standard-RGB-Stripe Raster anwendet, ergibt sich zudem die vorteilhafte Möglichkeit, im 2D-Modus zwei übereinanderliegende (gestauchte) Pixel mit dem gleichen Signal anzusteuern und sie so wieder zu einem einzigen (quadratischen) Pixel zusammenzufassen. Im 2D-Modus ist das Display dann kompatibel mit Bilddateien, für die in Zeilenrichtung und in Spaltenrichtung die gleiche Auflösung vorgesehen ist. Wahlweise kann man natürlich im 2D-Modus auch die gestauchten Pixel unabhängig voneinander ansteuern, um von der höheren Auflösung in der Richtung y zu profitieren.

Alternativ zu einer Stauchung kann der Diagonalabstand auch mittels Streckung variiert werden, so dass sich auch auf diese Weise vorteilhafte Pixelraster aus nicht vorteilhaften Pixelrastern ableiten lassen.

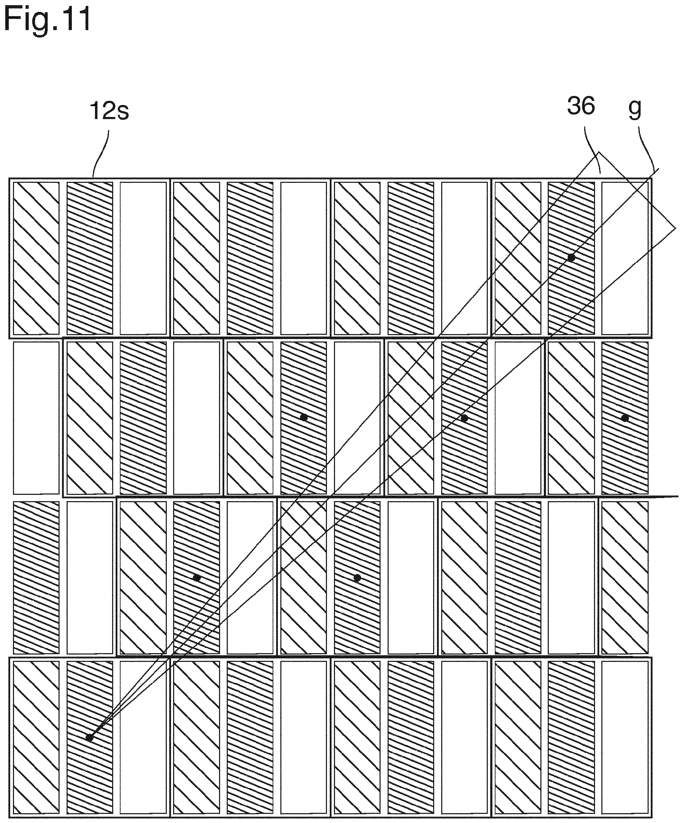

Eine andere Möglichkeit, bekannte Pixelraster zu modifizieren, besteht darin, die Pixel in aufeinanderfolgenden Zeilen um einen Bruchteil der Pixelbreite gegeneinander zu verschieben. In Fig. 11 ist dies für eine Modifikation des Standard-RGB-Stripe Pixelrasters aus Fig. 6 gezeigt. In der obersten Zeile sind in Fig. 11 die gleichen Pixel 12s gezeigt wie in Fig. 6. In der nächsttieferen Zeile wurden alle Pixel um die Breite eines Subpixels nach rechts verschoben. In der dritten Zeile von oben wurden die Pixel nochmals um die Breite eines Subpixels verschoben, und in der vierten Zeile erhält man nach einer nochmaligen Verschiebung um die Breite eines Subpixels wieder das gleiche Pixelmuster wie in der obersten Zeile. Für das Pixel in der unteren linken Ecke ist die Diagonale f1 eingezeichnet, ebenso eine Winkelzone 36 von ± 2° um die Diagonale f1 herum. Man erkennt, dass auch hier in der zweituntersten Zeile und in der darüber liegenden Zeile keine Pixel vorhanden sind, deren Mittelpunkt in der Winkelzone 36 liegen. Erst in der obersten Zeile findet sich wieder ein solches Pixel (in der Ecke oben rechts), das in dieser Zone liegt. Auch hier ergibt sich wieder für beide Diagonalen ein Diagonalabstand d1, d2 = ~4,2 e. Dass die Diagonalabstände d1, d2 für beide Diagonalen f1, f2 identisch sind, ist bei einer Modifikation mittels Verschiebung nicht zwingend der Fall. Wenn man bei diesem Pixelraster zum Beispiel den zulässigen Winkelbereich der Winkelzone 36 um die Diagonale f1 herum nicht auf ± 2° einschränkt, sondern ± 5° zulässt, so ergibt sich für die Diagonale f1 ein Diagonalabstand d1 von etwa 3,1 e und für die Diagonale f2 ein Diagonalabstand d2 von etwa 2,6 e.

Auf entsprechende Weise könnte das Pixelraster auch durch Verschiebung um die Breite eines Subpixels nach links modifiziert werden.

Auch diese Art der Modifikation durch Verschiebung von Zeilen ist ebenfalls bei anderen Pixelrastern anwendbar. Analog dazu lassen sich auch mittels einer vertikalen Verschiebung von Spalten vorteilhafte Raster gewinnen.

Wenn das Pixelraster durch zeilenweise Verschiebung modifiziert wird, muss die Verschiebung nicht in jeder Zeile um denselben Betrag erfolgen. Zum Beispiel ist es auch möglich, nur jede zweite Zeile zu verschieben. Ebenso ist es möglich, die Zeilen alternierend nach rechts und nach links zu verschieben. Bei beiden dieser Modifikationen eines Standard-RGB-Stripe Rasters erhält man für jede Diagonale einen Diagonalabstand von etwa 2,828 e.

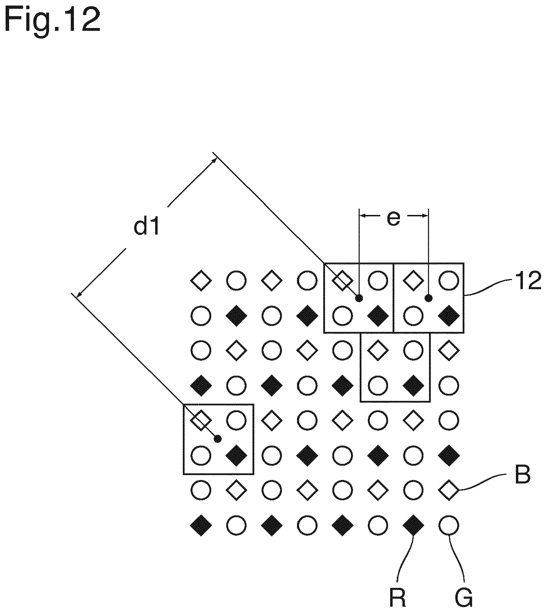

Bei dem "Bayer-Muster" führt eine Verschiebung um eine halbe Pixelbreite ebenfalls zu einem Diagonalabstand von etwa 2,828 e, wie in Fig. 12 gezeigt ist. Die Subpixel R, G, B jedes Pixels 12 sind hier durch Verwendung unterschiedlicher Formen und Füllungen kenntlich gemacht. Die Pixel in den aufeinanderfolgenden Zeilen sind jeweils um e/2 gegeneinander verschoben. Für zwei Pixel 12, die auf einer gemeinsamen Diagonalen f1 liegen, ist der Mittenabstand d2 eingezeichnet. Dieser Mittenabstand wird bei keinem Paar von Pixeln, die auf derselben Diagonalen liegen, unterschritten.

Um ein Standard-Pixelraster zu modifizieren, sind auch Kombinationen der beiden oben beschriebenen Arten denkbar. Wenn man beispielsweise das Standard-RGB-Stripe Raster um den Faktor 1/3 staucht und außerdem die Zeilen um 1/3 Pixelbreite gegeneinander verschiebt, erhält man für eine der beiden Diagonalen den vorteilhaften Diagonalabstand d1 = ~4,242 e, während sich für die andere Diagonale ein Diagonalabstand von lediglich d2 = 1 e ergibt.

Ein besonderer Vorteil des in Fig. 11 gezeigten Ausführungsbeispiels besteht darin, dass sich an den ursprünglichen Pixelpositionen jeweils wieder Gruppen aus drei verschiedenen Subpixeln finden. In jeder dieser ursprünglichen Pixelpositionen kann deshalb der gleiche Farbwert generiert werden wie bei einem normalen RGB-Pixel, nur dass die Positionen der Sub-Pixel zyklisch vertauscht sind. Dies ist jedoch für die Wiedergabe von Bildern im 2D-Modus nicht relevant. Wenn keine autostereoskopische Wiedergabe erwünscht ist, kann somit im 2D-Modus das Display auf die gleiche Weise angesteuert werden wie das Standard-RBG-Stripe Display. Dieser Vorteil lässt sich auch bei den Modifikationen von einigen anderen Standard-Pixelrastern erreichen, beispielsweise bei dem schon erwähnten modifizierten Bayer-Muster mit einem Pixelversatz um eine halbe Pixelbreite (siehe Fig. 12).

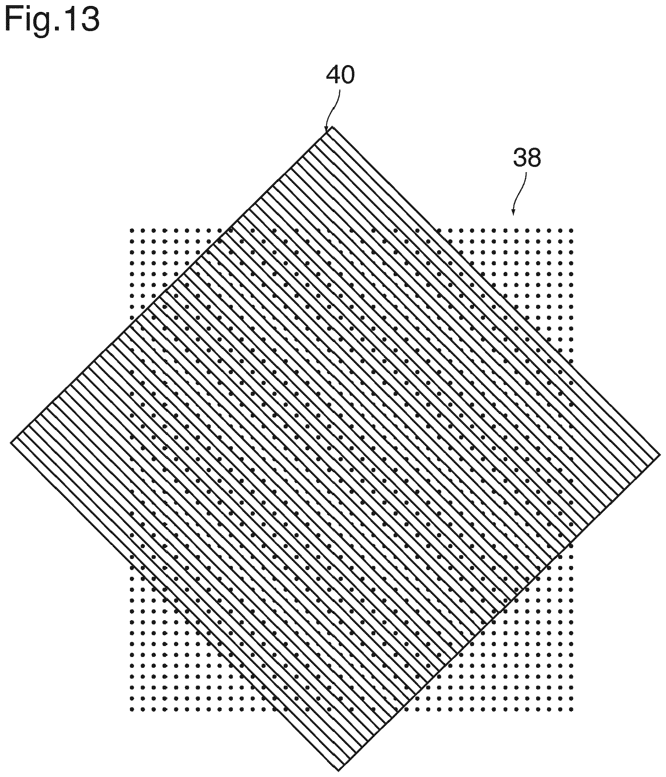

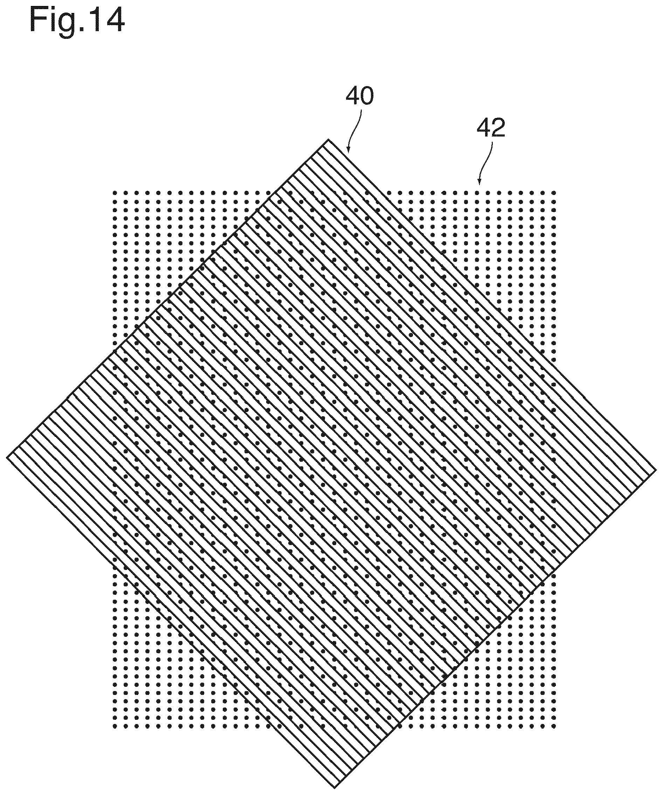

Der Effekt der hier vorgeschlagenen Modifikationen des Pixelrasters soll anhand der Figuren 13 und 14 illustriert werden.

Fig. 13 zeigt ein herkömmliches, quadratisches Pixelraster 38 in Kombination mit einer Parallaxenbarriere 40, die unter einem Winkel von 45° geneigt ist. Man erkennt ein deutliches Schwebungs-Muster mit einer Periode, die etwa das Achtfache der Periode der Parallaxenbarriere 40 beträgt, so dass die Helligkeitsschwankungen deutlich sichtbar sind. Fig. 14 zeigt dieselbe Parallaxenbarriere 40 in Kombination mit einem gestauchten Pixelraster gemäß der Erfindung. Hier ist kein Schwebungs-Effekt mehr wahrnehmbar. Die Periode des Schwebungs-Musters in Fig. 13 hängt natürlich auch von der Breite der Parallaxenbarriere ab. Der in Fig. 12 gezeigte Effekt, also die Unterdrückung der Schwebungen, tritt aber bei Parallaxenbarrieren mit allen gängigen Breiten ein.

**Patentansprüche**

1. Basisdisplay (10) für eine autostereoskopische Displayanordnung (30, 32), mit in einem periodischen Raster (42) angeordneten Pixeln (12), **dadurch ge-** **kennzeichnet, dass** für mindestens eine der beiden Diagonalen (f1, f2), die mit der Displayhorizontalen (x) einen Winkel von 45° bilden, gilt, dass für zwei beliebige Pixel (12), die die Bedingung erfüllen, dass eine durch die Mittelpunkte (P) der beiden Pixel gehende Gerade (g) mit der Diagonalen (f1, f2) einen Winkel zwischen -2° und 2° bildet, der Mittenabstand (d1, d2) der Pixel größer ist als das 1,5-fache, vorzugsweise größer ist als das 1,8-fache, weiter vorzugsweise größer ist als das 2-fache eines Basisabstands (e), der definiert ist als das Minimum der Mittenabstände aller Pixelpaare.

2. Basisdisplay nach Anspruch 1, bei dem das Pixelraster (42) abgeleitet ist aus einem der folgenden Standard-Pixelraster: Standard-RGB-Stripe, PenTile-Prototyp, PenTile RBGB, PenTile RBGW, PenTile Diamond, Variation von RGB, RGBW Stripe, Bayer-Muster, und bei dem das Pixelraster (42) aus dem Standard-Pixelraster hervorgeht durch Streckung oder Stauchung senkrecht zur oder entlang der Richtung der Displayhorizontalen x und/oder durch Verschiebung einzelner Zeilen (14) relativ zueinander um weniger als eine Pixelbreite und/oder durch Verschiebung einzelner Spalten relativ zueinander um weniger als eine Pixelhöhe.

3. Basisdisplay nach Anspruch 2, bei dem das Pixelraster um einen Faktor 2/3 gestaucht wird.

4. Basisdisplay nach Anspruch 2, bei dem das Pixelraster um einen Faktor 1/2 gestaucht wird.

5. Basisdisplay nach Anspruch 3 oder 4, bei dem das Standard-Pixelraster Standard-RBG-Stripe ist.

6. Basisdisplay nach Anspruch 3 oder 4, bei dem das Standard-Pixelraster PenTile Diamond ist.

7. Basisdisplay nach einem der vorstehenden Ansprüche, bei dem für mindestens eine der beiden Diagonalen (f1, f2) gilt, dass zwei beliebige Pixel (12), die die Bedingung erfüllen, dass eine durch die Mittelpunkte (P) der beiden Pixel gehende Gerade (g) mit der Diagonalen (f1, f2) einen Winkel zwischen -5° und 5° bildet, der Mittenabstand (d1, d2) der Pixel größer ist als das 1,5-fache, vorzugsweise größer ist als das 1,8-fache, weiter vorzugsweise größer ist als das 2-fache des Basisabstands (e).

8. Autostereoskopische Displayanordnung mit einem Basisdisplay (10) nach einem der vorstehenden Ansprüche, und einer Parallaxenbarriere (18), die mit einer der der Diagonalen (f1, f2) einen Winkel zwischen -5° und 5° bildet, wobei der Mittenabstand (d1, d2) der auf der Geraden (g) liegenden Pixel größer ist als das 1,5-fache, vorzugsweise größer ist als das 1,8-fache, weiter vorzugsweise größer ist als das 2-fache des Basisabstands (e).

Fig.1

Fig.2

# Fig. 3

# Fig.4

# Fig.5

# Fig.6

# Fig.7

# Fig.8

A: PenTile Prototyp

B: PenTile RGBG

C: PenTile RGBW

D: Variation von RGB

E: RGBW Stripe

F: Bayer-Muster

Fig. 9

Fig. 10

Fig.11

# Fig.12

Fig.13

Fig.14

**EP 3 767 946 A1**

Europäisches Patentamt
European Patent Office
Office européen des brevets

# EUROPÄISCHER RECHERCHENBERICHT

Nummer der Anmeldung

EP 19 18 6719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/102495 A1 (KONINKL PHILIPS NV [NL]) 30. Juni 2016 (2016-06-30) | 1-7 | INV. H04N13/31 |
| Y | * Abbildung 12 *<br>* Seite 4, Zeile 30 - Seite 5, Zeile 7 *<br>* Seite 16, Zeile 16 - Zeile 34 *<br>----- | 8 | H04N13/317<br>G02B30/32 |
| Y | WO 2014/173853 A1 (KONINKL PHILIPS NV [NL]) 30. Oktober 2014 (2014-10-30)<br>* Seite 4, Zeile 29 - Zeile 33 *<br>* Seite 7, Zeile 24 - Zeile 26 *<br>----- | 8 | |
| A | NASHEL A ET AL: "Random Hole Display: A non-uniform barrier autostereoscopic display",<br>3DTV CONFERENCE: THE TRUE VISION - CAPTURE, TRANSMISSION AND DISPLAY OF 3D VIDEO, 2009, IEEE, PISCATAWAY, NJ, USA, 4. Mai 2009 (2009-05-04), Seiten 1-4, XP031471573,<br>ISBN: 978-1-4244-4317-8<br>* Zusammenfassung *<br>----- | 1,8 | |
| | | | RECHERCHIERTE SACHGEBIETE (IPC) |
| A | EP 2 725 807 A2 (SAMSUNG DISPLAY CO LTD [KR]) 30. April 2014 (2014-04-30)<br>* Zusammenfassung *<br>----- | 1,8 | H04N<br>G02B |

Der vorliegende Recherchenbericht wurde für alle Patentansprüche erstellt

| Recherchenort | Abschlußdatum der Recherche | Prüfer |
|---|---|---|
| Den Haag | 15. Januar 2020 | Cooke, Edward |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 6719

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2020

| Im Recherchenbericht angeführtes Patentdokument | Datum der Veröffentlichung | Mitglied(er) der Patentfamilie | Datum der Veröffentlichung |
|---|---|---|---|
| WO 2016102495 A1 | 30-06-2016 | BR 112017013418 A2 | 06-03-2018 |
| | | CA 2971947 A1 | 30-06-2016 |
| | | CN 107113418 A | 29-08-2017 |
| | | EP 3237965 A1 | 01-11-2017 |
| | | ES 2720047 T3 | 17-07-2019 |
| | | JP 6376714 B2 | 22-08-2018 |
| | | JP 2018507428 A | 15-03-2018 |
| | | KR 20170097199 A | 25-08-2017 |
| | | PH 12017501167 A1 | 11-12-2017 |
| | | PL 3237965 T3 | 30-08-2019 |
| | | RU 2017126028 A | 25-01-2019 |
| | | TR 201906197 T4 | 21-05-2019 |
| | | TW 201631360 A | 01-09-2016 |
| | | US 2017307898 A1 | 26-10-2017 |
| | | WO 2016102495 A1 | 30-06-2016 |
| | | ZA 201704974 B | 27-02-2019 |
| WO 2014173853 A1 | 30-10-2014 | TW 201447382 A | 16-12-2014 |
| | | WO 2014173853 A1 | 30-10-2014 |
| EP 2725807 A2 | 30-04-2014 | CN 103795997 A | 14-05-2014 |
| | | EP 2725807 A2 | 30-04-2014 |
| | | JP 6214933 B2 | 18-10-2017 |
| | | JP 2014085663 A | 12-05-2014 |
| | | KR 20140053740 A | 08-05-2014 |
| | | US 2014118412 A1 | 01-05-2014 |

EPO FORM P0461

Für nähere Einzelheiten zu diesem Anhang : siehe Amtsblatt des Europäischen Patentamts, Nr.12/82

**EP 3 767 946 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016107892 A1
- US 2012050857 A1
- US 8441584 B2